# EUROPEAN PATENT APPLICATION

(11) **EP 4 521 700 A1**
(43) Date of publication of application: **12.03.2025**
(21) Application number: 23806845.6
(22) Date of filing: 12.05.2023
(51) Int. Cl.: H04L 43/0852

(54) **PROPAGATION DELAY DETERMINATION METHOD AND APPARATUS**

(30) Priority: 18.05.2022 CN 202210544281
(71) Applicant: Huawei Technologies Co., Ltd., Shenzhen, Guangdong 518129 (CN)
(72) Inventor: ZHAO, Yong, Shenzhen, Guangdong 518129 (CN); LIU, Yican, Shenzhen, Guangdong 518129 (CN)
(74) Representative: Gill Jennings & Every LLP
(86) International application number: PCT/CN2023/093876
(87) International publication number: WO 2023/221893

(57) **Abstract**

The present invention discloses a method and an apparatus for determining a propagation latency. The method includes: A network device extracts first content from a first data packet of a target application according to a content extraction rule corresponding to the target application, where the first content reflects a data packet feature of the target application. In this case, when the network device stores second content of the target application, and the second content and the first content satisfy a pairing condition, a propagation latency of the target application can be determined based on a time difference between a first moment at which the network device processes a first data packet and a second moment at which the network device previously processes a second data packet of the target application. Therefore, regardless of how data packets related to the target application are encrypted, any network device on a transmission path of the data packets may obtain the propagation latency of the target application in the foregoing manner. Therefore, a common method for determining a propagation latency is provided.

## Description

### CROSS-REFERENCE TO RELATED APPLICATIONS

This application claims priority to Chinese Patent Application No. 202210544281.1, filed with the China National Intellectual Property Administration on May 18, 2022 and entitled "METHOD AND APPARATUS FOR DETERMINING PROPAGATION LATENCY", which is incorporated herein by reference in its entirety.

### TECHNICAL FIELD

This application relates to the field of network technologies, and in particular, to a method and an apparatus for determining a propagation latency.

### BACKGROUND

Currently, users may run network applications such as online games over networks. Currently, the users have increasingly high requirements on network quality of the network applications. A propagation latency is a key indicator for evaluating the network quality of the network applications. Therefore, how to reduce the propagation latency of the network applications is a problem that is worth attention.

A prerequisite for reducing the propagation latency of the network applications is to determine the propagation latency of the network applications. Currently, a common manner is to add data that is used to test the propagation latency in a specific application protocol, for example, a heartbeat data packet. However, currently, different network applications generally use different transmission mechanisms and protocol formats. A payload in an application data packet is encrypted. Only network devices (such as a client and a server) of a network application operator have a decryption suite, so that a heartbeat data packet and a heartbeat response packet in transmission can be parsed to obtain the propagation latency. It is difficult for a third-party network device such as a router on a transmission path of the application data packet to decrypt the application data packet that is transmitted in an encrypted manner to obtain the propagation latency. Further, optimization and adjustment cannot be performed based on the propagation latency. Therefore, a common method for determining a propagation latency is urgently needed.

### SUMMARY

This application provides a method and an apparatus for determining a propagation latency, to implement a common method for determining a propagation latency on a network device.

According to a first aspect, an embodiment of this application provides a method for determining a propagation latency. The method may be applied to an apparatus for determining a propagation latency according to a third aspect of this application. The method includes:

A network device extracts first content from a first data packet of a target application according to a content extraction rule corresponding to the target application, where the first content includes binary data extracted from the first data packet and/or plaintext content obtained based on the binary data, and the first content reflects a data packet feature of the target application; and if the network device stores second content of the target application, and the second content and the first content satisfy a pairing condition, determines a propagation latency of the target application based on a time difference between a first moment at which the network device processes the first data packet and a second moment at which the network device previously processes a second data packet of the target application, the second content is extracted from the second data packet according to the content extraction rule, and that the second content and the first content satisfy a pairing condition indicates that the first data packet is a response data packet corresponding to the second data packet.

In the foregoing manner, the network device obtains the propagation latency regardless of whether the binary data extracted from the first data packet can be decrypted into the plaintext content. In this embodiment of this application, the network device extracts the first content that reflects the data packet feature of the target application. Therefore, the first content may be used to mark the first data packet as a data packet of the target application, and determine whether the first content and the previously buffered second content of the target application satisfy the pairing condition. The second content is also extracted according to the content extraction rule from the second data packet. If the second content is buffered in the network device, and the second content and the first content satisfy the pairing condition, it indicates that both the first data packet and the second data packet are data packets from the target application, and the first data packet is the response data packet corresponding to the second data packet. Based on this, the network device determines the propagation latency of the target application based on the time difference between the first moment at which the network device processes the first data packet and the second moment at which the network device previously processes the second data packet. In this way, regardless of how data packets related to the target application are encrypted, any network device on a transmission path of the data packets may obtain the propagation latency of the target application in the foregoing manner. Therefore, a common method for determining a propagation latency is provided.

Optionally, before the extracting, by a network device, first content from a first data packet of a target application according to a content extraction rule corresponding to the target application, the method further includes:

The network device obtains a to-be-processed data flow of the target application; and the network device selects the first data packet from the to-be-processed data flow, where a length of the first data packet falls within a preset length range, and/or a preset position range of the first data packet includes a preset string.

In the foregoing manner, the network device selects the first data packet based on the length of the data packet and/or the preset string. Therefore, a data packet used for content extraction can be selected more accurately.

Optionally, that the second content and the first content satisfy a pairing condition is determined based on at least one of the following:
an operation result of a preset operation between a first value in the first content and a second value in the second content falls within a preset value range; the first value and the second value satisfy a preset correspondence; a first transmission direction in the first content is opposite to a second transmission direction in the second content, and a sequence of the first moment and the second moment is a preset sequence; and the time difference between the first moment and the second moment falls within a preset time difference range.

In this way, based on the at least one of the following items, whether the second content and the first content satisfy the pairing condition can be determined more accurately by using more information.

Optionally, the method further includes:

The network device determines a first latency of the target application based on a time difference between a third moment at which a third data packet is processed and a fourth moment at which a fourth data packet of the target application is processed before the third moment, where the third data packet is a response data packet corresponding to the fourth data packet.

The determining a propagation latency of the target application based on a time difference between a first moment at which the network device processes the first data packet and a second moment at which the network device previously processes a second data packet of the target application includes:
determining a second latency of the target application based on the time difference between the first moment and the second moment; and determining the propagation latency of the target application based on the first latency and the second latency.

In the foregoing manner, the first latency can be determined based on the time difference between the third moment and the fourth moment, and the second latency can also be determined based on the time difference between the first moment and the second moment. Therefore, the propagation latency of the target application is determined more accurately based on more groups of latency data.

### Optionally, the method further includes:

If the second content of the target application is not buffered in the network device, or the second content and the first content do not satisfy the pairing condition, the network device stores the first content; and when the first content satisfies a preset condition, the network device deletes the first content, where the preset condition includes: duration of storing the first content is greater than or equal to preset duration, and/or fifth content paired with the first content is extracted by the network device from a fifth data packet within the preset duration, and/or the first content is content extracted earliest from all content that is currently buffered in the network device, a data amount of all the content buffered in the network device is greater than or equal to a preset value, and any content buffered in the network device is extracted by the network device from an obtained data packet.

In the foregoing manner, when the second content of the target application is not buffered in the network device, or the second content and the first content do not satisfy the pairing condition, the first content is stored. Therefore, the network device continues to wait for the fifth content paired with the first content, and can delete the first content when the preset condition is satisfied. This avoids long-term retention of the first content in the network device, and reduces storage space consumption of the network device.

Optionally, the first data packet is a data packet sent by a peer device to the network device, the second data packet is a data packet sent by the network device to the peer device, and the peer device is an application client or an application server.

In the foregoing manner, the peer device is the application client or the application server. Therefore, the network device can determine both a latency between the network device and the application client and a latency between the network device and the application server. Therefore, flexibility of the method for determining a latency is improved.

Optionally, when the peer device is the application client, the propagation latency is a user latency of the target application; or when the peer device is the application server, the propagation latency is a network latency of the target application.

### Optionally, the method further includes:

If the propagation latency satisfies a preset latency optimization condition, the network device increases a priority of forwarding a data packet of the target application, and/or updating a port for forwarding the data packet corresponding to the target application, where network quality of a transmission line corresponding to a port after the update is higher than network quality of a transmission line corresponding to the port before the update.

The propagation latency of the target application can further be optimized based on a common manner for determining a propagation latency. Therefore, a common manner for optimizing a propagation latency is provided.

According to a second aspect, an embodiment of this application provides another method for determining a propagation latency, and the method may be applied to an apparatus for determining a propagation latency according to a fourth aspect of this application. The method includes:

A network device extracts first content from a first data packet of a target application according to a content extraction rule corresponding to the target application, where the first content includes binary data extracted from the first data packet and/or plaintext content obtained based on the binary data, and the first content reflects a data packet feature of the target application; and
the network device determines a propagation latency of the target application based on the first content and a corresponding function relationship between the first content and the propagation latency of the target application.

In the foregoing manner, the network device obtains the propagation latency regardless of whether the binary data extracted from the first data packet can be decrypted into the plaintext content. In this embodiment of this application, the network device can extract the first content that reflects the data packet feature of the target application. Therefore, the first content may be used to mark the first data packet as a data packet of the target application. Further, the network device can determine the propagation latency of the target application based on the first content and the corresponding function relationship between the first content and the propagation latency of the target application. Therefore, regardless of how data packets related to the target application are encrypted, any network device on a transmission path of the data packets may extract content and obtain the propagation latency of the target application in the foregoing manner. Therefore, a common method for determining a propagation latency is provided.

Optionally, before the extracting, by a network device, first content from a first data packet of a target application according to a content extraction rule corresponding to the target application, the method further includes:

The network device obtains a to-be-processed data flow of the target application; and the network device selects the first data packet from the to-be-processed data flow, where a length of the first data packet falls within a preset length range, and/or a preset position range of the first data packet includes a preset string.

Optionally, the first data packet is a data packet sent by a peer device to the network device, the second data packet is a data packet sent by the network device to the peer device, and the peer device is an application client or an application server.

Optionally, when the peer device is the application client, the propagation latency is a user latency of the target application; or when the peer device is the application server, the propagation latency is a network latency of the target application.

### Optionally, the method further includes:

If the propagation latency satisfies a preset latency optimization condition, the network device increases a priority of forwarding a data packet of the target application, and/or updating a port for forwarding the data packet corresponding to the target application, where network quality of a transmission line corresponding to a port after the update is higher than network quality of a transmission line corresponding to the port before the update.

According to a third aspect, an embodiment of this application provides an apparatus for determining a propagation latency. The apparatus includes:
an obtaining module, configured to: extract first content from a first data packet of a target application according to a content extraction rule corresponding to the target application, where the first content includes binary data extracted from the first data packet and/or plaintext content obtained based on the binary data, and the first content reflects a data packet feature of the target application; and
a processing module, configured to: if a network device stores second content of the target application, and the second content and the first content satisfy a pairing condition, determine a propagation latency of the target application based on a time difference between a first moment at which the network device processes the first data packet and a second moment at which the network device previously processes a second data packet of the target application, where the second content is extracted from the second data packet according to the content extraction rule; and that the second content and the first content satisfy a pairing condition indicates that the first data packet is a response data packet corresponding to the second data packet.

Optionally, before extracting the first content from the first data packet of the target application, the obtaining module is further configured to:
obtain a to-be-processed data flow of the target application; and select the first data packet from the to-be-processed data flow, where a length of the first data packet falls within a preset length range, and/or a preset position range of the first data packet includes a preset string.

Optionally, that the second content and the first content satisfy a pairing condition is determined based on at least one of the following:
an operation result of a preset operation between a first value in the first content and a second value in the second content falls within a preset value range; the first value and the second value satisfy a preset correspondence; a first transmission direction in the first content is opposite to a second transmission direction in the second content, and a sequence of the first moment and the second moment is a preset sequence; and the time difference between the first moment and the second moment falls within a preset time difference range.

Optionally, the processing module is further configured to:
determine a first latency of the target application based on a time difference between a third moment at which a third data packet is processed and a fourth moment at which a fourth data packet of the target application is processed before the third moment, where the third data packet is a response data packet corresponding to the fourth data packet; and
the processing module is specifically configured to:
   determine a second latency of the target application based on the time difference between the first moment and the second moment; and determine the propagation latency of the target application based on the first latency and the second latency.

Optionally, the processing module is further configured to:
if the second content of the target application is not buffered in the network device, or the second content and the first content do not satisfy the pairing condition, store the first content; and when the first content satisfies a preset condition, delete the first content, where the preset condition includes: duration of storing the first content is greater than or equal to preset duration, and/or fifth content paired with the first content is extracted by the network device from a fifth data packet within the preset duration, and/or the first content is content extracted earliest from all content that is buffered in the network device, a data amount of all the content currently buffered in the network device is greater than or equal to a preset value, and any content buffered in the network device is extracted by the network device from an obtained data packet.

Optionally, the first data packet is a data packet sent by a peer device to the network device, the second data packet is a data packet sent by the network device to the peer device, and the peer device is an application client or an application server.

Optionally, when the peer device is the application client, the propagation latency is a user latency of the target application; or when the peer device is the application server, the propagation latency is a network latency of the target application.

Optionally, the processing module is further configured to: if the propagation latency satisfies a preset latency optimization condition, increase a priority of forwarding a data packet of the target application, and/or update a port for forwarding the data packet corresponding to the target application, where network quality of a transmission line corresponding to a port after the update is higher than network quality of a transmission line corresponding to the port before the update.

According to a fourth aspect, an embodiment of this application provides an apparatus for determining a propagation latency. The apparatus includes:
an obtaining module, configured to: extract first content from a first data packet of a target application according to a content extraction rule corresponding to the target application, where the first content includes binary data extracted from the first data packet and/or plaintext content obtained based on the binary data, and the first content reflects a data packet feature of the target application; and
a processing module, configured to determine a propagation latency of the target application based on the first content and a corresponding function relationship between the first content and the propagation latency of the target application.

Optionally, before extracting the first content from the first data packet of the target application, the obtaining module is further configured to:
obtain a to-be-processed data flow of the target application; and select the first data packet from the to-be-processed data flow, where a length of the first data packet falls within a preset length range, and/or a preset position range of the first data packet includes a preset string.

Optionally, the first data packet is a data packet sent by a peer device to the network device, the second data packet is a data packet sent by the network device to the peer device, and the peer device is an application client or an application server.

Optionally, when the peer device is the application client, the propagation latency is a user latency of the target application; or when the peer device is the application server, the propagation latency is a network latency of the target application.

Optionally, the processing module is further configured to: if the propagation latency satisfies a preset latency optimization condition, increase a priority of forwarding a data packet of the target application, and/or update a port for forwarding the data packet corresponding to the target application, where network quality of a transmission line corresponding to a port after the update is higher than network quality of a transmission line corresponding to the port before the update.

According to a fifth aspect, an electronic device is provided. The electronic device includes: one or more processors and one or more memories. The one or more memories store one or more computer instructions. When the one or more computer instructions are executed by the one or more processors, the electronic device is enabled to perform the method according to the first aspect or the second aspect.

According to a sixth aspect, a computer-readable storage medium is provided. The computer-readable storage medium includes computer instructions. When the computer instructions are run on a computer, the computer is enabled to perform the method according to the first aspect or the second aspect.

According to a seventh aspect, this application provides a chip. The chip includes a processor. The processor is coupled to a memory, and is configured to read and execute a software program stored in the memory, to implement the method according to the first aspect or the second aspect.

According to an eighth aspect, this application provides a computer program product. When a computer reads and executes the computer program product, the computer is enabled to perform the method according to the first aspect or the second aspect.

For beneficial effects of the third aspect to the eighth aspect, refer to the beneficial effects of the first aspect or the second aspect. Details are not described herein again.

### BRIEF DESCRIPTION OF DRAWINGS

FIG. 1A is a schematic diagram of a network architecture to which a method for determining a propagation latency can be applied according to an embodiment of this application;
FIG. 1B is a schematic diagram of a propagation latency in a method for determining a propagation latency according to an embodiment of this application;
FIG. 2 is a schematic diagram of a scenario to which a method for determining a propagation latency can be applied according to an embodiment of this application;
FIG. 3 is a schematic diagram of a structure of a network device to which a method for determining a propagation latency can be applied according to an embodiment of this application;
FIG. 4 is a schematic diagram in which a method for determining a propagation latency is performed in a network device according to an embodiment of this application;
FIG. 5 is a schematic flowchart of steps of a method for determining a propagation latency according to an embodiment of this application;
FIG. 6 is a schematic flowchart of steps of another method for determining a propagation latency according to an embodiment of this application;
FIG. 7 is a schematic diagram of a structure of an apparatus for determining a propagation latency according to an embodiment of this application; and
FIG. 8 is a schematic diagram of a structure of an electronic device according to an embodiment of this application.

### DESCRIPTION OF EMBODIMENTS

The following clearly and completely describes the technical solutions in embodiments of this application with reference to the accompanying drawings in embodiments of this application.

In embodiments of this application, "one or more" refers to one, more than two (including two); "and/or" describes an association relationship between associated objects, and indicates that three relationships may exist, for example, A and/or B may indicate a case in which only A exists, both A and B exist, and only B exists, where A and B may be singular or plural. The character "/" generally indicates an "or" relationship between the associated objects.

Ordinal numerals such as "first" and "second" in embodiments of this application are used to distinguish between a plurality of objects, and are not intended to limit a sequence, a time sequence, priorities, or importance degrees of the plurality of objects.

### Application scenarios:

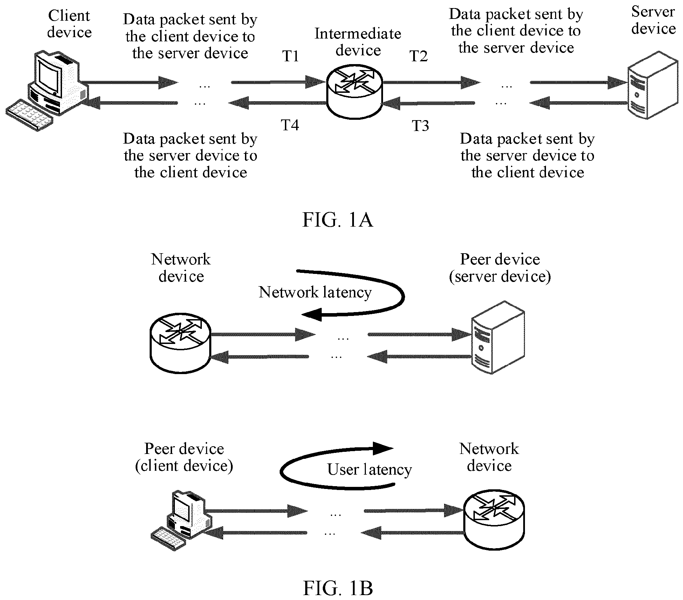

FIG. 1A shows a network architecture to which a method for determining a propagation latency can be applied according to an embodiment of this application. The network architecture shown in FIG. 1A includes a server device, an intermediate device, and a client device. The network architecture shown in FIG. 1A can be applicable to various communication systems. Optionally, the network architecture shown in FIG. 1A is a 4G communication system, or a 5G communication system, or a future communication system. The network architecture and the service scenario described in embodiments of this application are intended to describe the technical solutions in embodiments of this application more clearly, and do not constitute a limitation on the technical solutions provided in embodiments of this application. A person of ordinary skill in the art may know that, with evolution of the communication network architecture and emergence of new service scenarios, the technical solutions provided in embodiments of this application are also applicable to similar technical problems.

A specific network protocol is not limited in the network architecture shown in FIG. 1A either. Optionally, the network protocol is a user datagram protocol (user datagram protocol, UDP) or a quick UDP Internet connections (quick UDP Internet connections, QUIC). The method for determining a propagation latency according to an embodiment of this application can be used irrelative of whether data packets are encrypted, and in what manner the data packets are encrypted in a network protocol.

It should be noted that the network architecture shown in FIG. 1Ais merely an example, and does not limit a specific device quantity of server devices, intermediate devices, and client devices, nor a device type. Optionally, the client device is a client device or a client cluster, and the client cluster includes a plurality of client devices. Optionally, the client device is a mobile phone terminal, a personal computer, or the like. In the network architecture shown in FIG. 1A, one or more intermediate devices may exist on a transmission path between the client device and the server device, provided that the client device can communicate with the server device. Optionally, the intermediate device includes a router, a modem, a gateway, a firewall, a broadband remote access server (broadband remote access server, BRAS), and the like. Optionally, the server device is a server device or a server cluster, and the server cluster includes a plurality of server devices. Optionally, the server device may be a server or another device.

A device that implements the method for determining a propagation latency according to embodiments of this application is not limited. The device may be any network device in the network architecture shown in FIG. 1A. Any network device in the server device, the intermediate device, and the client device can perform the method for determining a propagation latency. The network device can obtain a propagation latency of a target application by performing the method for determining a propagation latency. The target application may be any network application, and optionally, the target application is an online game, network chatting software, or the like.

In embodiments of this application, the propagation latency (latency) of the target application is understood as round trip time (round trip time, RTT) of a data packet of the target application travelling between a local device, for example, the network device shown in FIG. 1A and a peer device. Optionally, the peer device is the client device or the server device. For example, the client device is an application client of the target application, and the server device is an application server of the target application. Optionally, the propagation latency is a network latency or a user latency. As shown in FIG. 1B, the network latency refers to RTT of the data packet of the target application travelling between the network device and the server device (the peer device) when the network device is not the server device. Optionally, the network latency refers to round-trip time from a time point at which the network device sends the data packet of the target application to the server device to a time point at which the network device receives a response data packet from the server device. The user latency refers to RTT of the data packet of the target application travelling between the network device to the client device when the network device is not the client device. Optionally, the user latency refers to round-trip time from a time point at which the network device sends the data packet of the target application to the client device to the time point at which the network device receives a response data packet from the client device.

It should be noted that, in the foregoing definition of the propagation latency of the target application, when the network device is neither the client device nor the server device, the data packet of the target application enters the network device and leaves the network device. In addition, retention duration from the time point at which the data packet enters the network device to the time point at which the data packet leaves is short relative to the entire propagation latency of the target application. Therefore, a start moment or an end moment of the propagation latency of the target application may include a plurality of possible cases. Optionally, the start moment of the propagation latency of the target application includes: any moment in the duration in which the data packet of the target application enters the network device from the client device and then leaves the network device (in other words, sent to the server device). For example, FIG. 1A shows an example in which the network device is an intermediate device. A moment at which the intermediate device receives the data packet of the target application from the client device is a moment T1. A moment at which the intermediate device sends the data packet of the target application to the server device is a moment T2. A time period in which the data packet of the target application is retained in the intermediate device is from T1 to T2. A moment at which the intermediate device receives the response data packet from the server device is T3. A moment at which the intermediate device sends the response data packet to the client device is T4. A time period in which the response data packet of the target application is retained in the intermediate device is from T3 to T4. The propagation latency of the target application is defined as T2'-T1'. T2' is any moment from T3 to T4, and T1' is any moment from T1 to T2. Optionally, the propagation latency of the target application is T3-T2 or T4-T2.

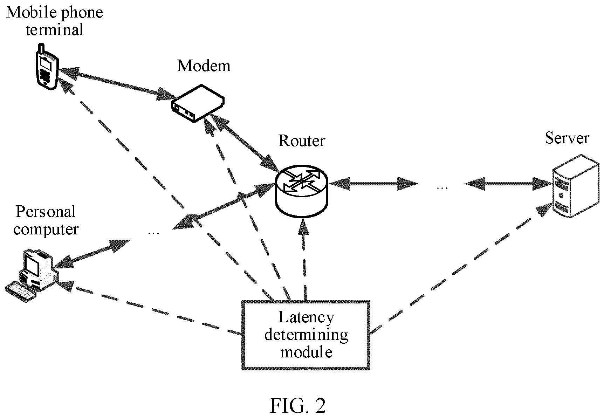

Any network device in the network architecture shown in FIG. 1A can perform the method for determining a propagation latency according to embodiments of this application. Optionally, the method for determining a propagation latency is jointly performed by a plurality of modules in the network device, or is implemented independently by a latency determining module. For example, the method for determining a propagation latency is implemented by using a latency determining module. A specific form of the latency determining module is not limited. Optionally, the latency determining module is software or hardware. For example, the latency determining module is a chip or a segment of program code. When the latency determining module is used as a function module, the latency determining module can be embedded in any network device in the network architecture shown in FIG. 1A. The scenario shown in FIG. 2 is used as an example to describe a possible scenario in which the latency determining module is embedded in the network device. Specifically, in the scenario shown in FIG. 2, some common network devices are listed. Optionally, the client device is a mobile phone terminal or a personal computer (PC, Personal Computer), the intermediate device is a wireless router or a broadband dial-up optical network terminal, and the server device is a server. The latency determining module may be disposed in the foregoing network devices, to implement the method for determining a propagation latency.

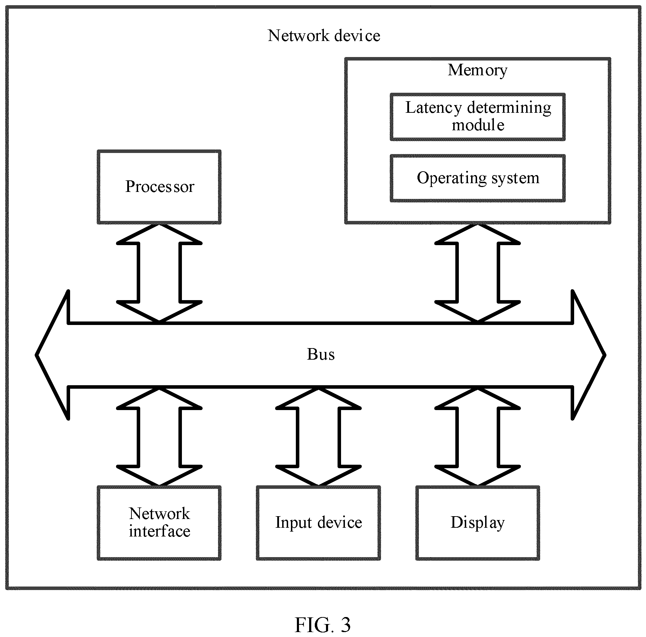

FIG. 3 is a schematic diagram of a structure of a network device to which a method for determining a propagation latency can be applied according to an embodiment of this application. Optionally, the network device shown in FIG. 3 is any network device in the scenario shown in FIG. 2. In an example in FIG. 3, the network device includes the following modules: a bus, a memory, an input device (such as a mouse, a keyboard, or the like), a display, a processor, and a network interface. An operating system is installed in the memory, and the latency determining module is disposed in the memory. For example, the latency determining module is software in the memory, and runs on the operating system.

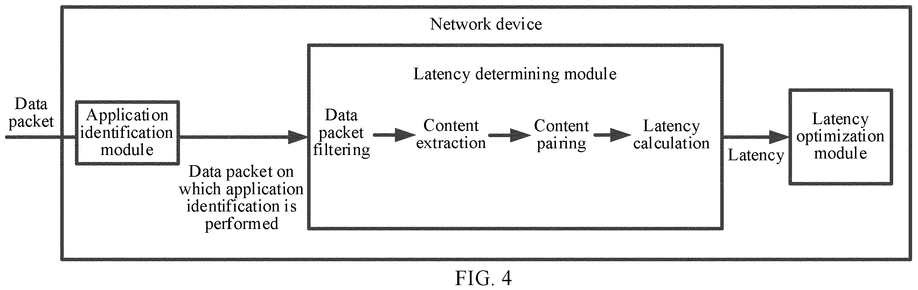

For ease of understanding of the method for determining a propagation latency according to this application, the following describes in detail the method for determining a propagation latency according to this application with reference to FIG. 4. FIG. 4 shows a process of performing the method for determining a propagation latency in the network device. Optionally, the process includes three steps: application identification, latency determining, and latency optimization. In an example in FIG. 4, an application identification module, a latency determining module, and a latency optimization module are disposed in the network device. The application identification module is configured to identify an application, the latency determining module is configured to determine a latency, and the latency optimization module is configured to optimize the latency.

It should be understood that the modules in the network device shown in FIG. 4 are merely used an example. Optionally, in some embodiments, the network device has more or fewer modules than those shown in FIG. 4, or combines two or more modules, or has different modules. Optionally, the modules shown in FIG. 4 can be implemented in hardware that includes one or more signal processing and/or application-specific integrated circuits, software, or a combination of hardware and software. Optionally, the application identification module and the latency optimization module are not disposed in the network device. An application identification function and a latency optimization function are integrated into the latency determining module.

The following describes possible processes of the three steps: the application identification, the latency determining, and the latency optimization.

### Application identification:

The application identification refers to identifying a network application to which a data packet belongs, and may be performed by the application identification module. In some embodiments, the application identification also includes identifying a data packet type to which the data packet belongs. Usually, a large amount of data needs to be transmitted for a network application. Therefore, a plurality of data packets may be continuously transmitted, and these data packets form a data flow of the network application. The application identification can be implemented at a data packet level and a data flow level. Implementation at the data packet level refers to a fact that the application identification module can independently determine a network application and a data packet type to which a data packet belongs. Implementation at the data flow level refers to a fact that the application identification module can determine, in a unified manner, a network application and a data packet type to which data packets in the data flow belong. For example, the network application is a game Honor of Kings or Game for Peace; and the data flow type is any one of the following types: a battle flow, a text chat flow, a voice call flow, or a video play flow. For example, a result of the application identification is a battle flow of Honor of Kings, a heartbeat flow of Game for Peace, and the like.

For example, possible implementations of the application identification may include the following types:
(1) Perform the application identification on the data packet of the network application based on a string in the data packet. For example, if the data packet of the network application includes a binary string corresponding to "WangZheRongYao", it can be learned that the network application is the online game Honor of Kings. The manner can be implemented at the data packet level and the data flow level.
(2) Perform the application identification on the data flow of the network application based on the length of the data packet in the data flow. For example, if the packet lengths of the first four data packets in the data flow of the network application are 200, -200, 280, and -420, it is determined that the network application is the online game Game for Peace. A positive number indicates a data packet sent by the client device to the server device, and a negative number indicates a data packet sent by the server device to the client device. The manner can be implemented at the data flow level.
(3) Perform the application identification on the data flow of the network application based on a server internet protocol (Internet protocol, IP) address in the data flow. For example, if the IP address in the data flow is a server IP address of the online game Honor of Kings, it is determined that the network application is the online game Honor of Kings. The manner can be implemented at the data packet level and at the data flow level.

It should be noted that the several foregoing implementations of the application identification are merely used as an example, and the application identification is not limited herein. Through an application identification phase, the network application and the data packet type that correspond to the data packet or the data packet in the data flow can be determined. Optionally, the application identification module outputs the data packet, the data flow, and the result of the application identification to the latency determining module. For example, the result of the application identification is an identity of the data flow of the network application, an identity (identity, ID) of the network application, and the type of the data packet in the data flow.

### Latency determining:

Optionally, the latency determining includes four sub-steps: (1) data packet filtering; (2) content extraction; (3) content pairing; and (4) latency calculation. It should be noted that, because there may be a plurality of data packets, whether the four sub-steps are performed or not is determined based on a specific data packet feature. For example, data packets of some target applications do not need to be filtered, and all data packets of the target applications can be extracted. For example, when the content extraction is performed on data packets of some target applications, sub-step (3) is not needed. A propagation latency may be obtained by performing data conversion based on content extracted from the data packets. The four sub-steps may be specifically as follows:
(1) Data packet filtering:

There may be a plurality of data packets of a target application. Some data packets can reflect a data packet feature of the target application, and are distinct from data packets of another target application. In this case, these data packets are filtered out, and content is extracted from these data packets for pairing. Therefore, a data packet of the target application can be accurately identified. The data packet filtering can be performed at the data flow level and at a single data packet level.

There are a plurality of implementations of filtering at the data flow level. Optionally, all data packets in the data flow can be selected based on the network application ID and the data flow type of the data flow. For example, the network application ID and the data flow type are included in the trustlist. The foregoing implementation is merely used as an example, and there may further be a plurality of implementations. For example, whether data packets in the data flow can be selected is determined based on the network application ID of the data flow, the data flow type, and a communication port of the data flow.

There are a plurality of implementations of filtering at the data packet level. Optionally, for a first data packet of the target application, if the length of the first data packet falls within a preset length range, and/or the first data packet includes a preset string in a preset position range, the first data packet is selected. Optionally, the preset string and the preset position range are in correspondence with the target application.

In a case in which the length of the first data packet falls within the preset length range, for example, if the length of the first data packet is 200 bytes, the first data packet is selected. For example, if the length of the first data packet is greater than 150 bytes and less than 250 bytes, the first data packet is selected.

In a case in which the first data packet includes the preset string in the preset position range, optionally, the preset string is a binary string corresponding to a name of the target application. Optionally, the preset position range of the first data packet is an entire data packet, or is a partial position in the first data packet. For example, the first data packet is a data packet of the game Honor of Kings. The preset position range of the first data packet deviates from a start position from 20 bytes to 50 bytes. The preset position range includes the string "WangZheRongYao" corresponding to the game Honor of Kings.

It should be noted that, in embodiments of this application, implementations corresponding to the data packet filtering are merely described as an example, and do not constitute a limitation on the implementations corresponding to data packet filtering. The implementations corresponding to the foregoing data packet filtering may be used in an integrated or selective manner based on an actual scenario.

### (2) Content extraction:

The content extraction is to extract content that can reflect the data packet feature of the target application from the data packet. Because data packet formats of target applications may be different, a specific manner of extracting content from the data packet needs to be determined according to a content extraction rule corresponding to the target application. The first data packet of the target application is used as an example for description. The latency determining module extracts first content from the first data packet of the target application, and the first content can reflect the data packet feature of the target application. Optionally, the first content extracted by the latency determining module includes binary data extracted from the first data packet, and/or plaintext content obtained based on the binary data. For example, the binary data extracted from the first data packet is binary data in a preset position range in the first data packet. For example, the plaintext content obtained based on the binary data is the length of the first data packet, or a transmission direction of the first data packet, or a value corresponding to the binary data in the preset position range in the first data packet.

It should be noted that for different network applications, the first content may have different functions. When there is a corresponding preset function relationship between the first content and the propagation latency of the target application, the latency determining module can directly calculate the propagation latency of the target application based on the first content and the preset function relationship. In other words, step (3) is skipped and corresponding step (4) is performed. When there is no corresponding preset function relationship between the first content and the propagation latency of the target application, the latency determining module can perform the content pairing based on the first content to obtain the propagation latency of the target application, which corresponds to step (3). It should be noted that whether there is a corresponding preset function relationship between the first content and the propagation latency of the target application does not need to be determined in the latency determining module. After the application identification is performed on the target application, it is determined whether there is a corresponding preset function relationship between the first content and the propagation latency of the target application, and a corresponding procedure is directly performed in the latency determining module.

### (3) Content pairing:

Content pairing refers to pairing content extracted from data packets of a same target application. The latency determining module determines whether second content of the target application is stored in the network device, and whether the second content and the first content satisfy a pairing condition. The second content is extracted from a second data packet according to the content extraction rule of the target application. The network device processes the second data packet, and then processes the first data packet. That the second content and the first content satisfy a pairing condition indicates that the first data packet is a response data packet corresponding to the second data packet. The latency determining module can mark, by pairing the first content with the second content, the second data packet that is of the target application and that is sent by the network device to a peer device, and the first data packet to which the peer device responds.

Optionally, whether the first content and the second content satisfy the pairing condition is determined based on at least one of the following four items:
an operation result of a preset operation between a first value in the first content and a second value in the second content falls within a preset value range; the first value and the second value satisfy a preset correspondence; a first transmission direction in the first content is opposite to a second transmission direction in the second content, and a sequence of a first moment and a second moment is a preset sequence; and a time difference between a first moment and a second moment falls within a preset time difference range.

Optionally, the pairing condition is designed based on the data packet feature of the target application, and the pairing condition is in correspondence with the target application. For example, when the target application is a network application A, satisfying the pairing condition means that each of the foregoing four items is satisfied. Alternatively, when the target application is a network application B, satisfying the pairing condition of the target application means that any three of the foregoing four items are satisfied.

Optionally, when the latency determining module determines that the second content of the target application is stored in the network device, and the second content and the first content satisfy the pairing condition, the first content and the second content are deleted. Optionally, when the latency determining module determines that the second content of the target application is not stored in the network device, or the second content and the first content satisfy the pairing condition, the first content is stored in the network device. For example, the first content is buffered in the network device, until the network device extracts content paired with the first content from a data packet that is received subsequently.

Optionally, to avoid that storage space of the network device is wasted as the first content cannot be paired for a long period of time because of problems such as a packet loss, when the first content satisfies a preset condition, the network device deletes the first content. Optionally, the preset condition includes: duration of storing the first content is greater than or equal to preset duration, and/or fifth content paired with the first content is extracted by the network device from a fifth data packet within the preset duration, and/or the first content is content extracted earliest from all content that is currently buffered in the network device, a data amount of all the content buffered in the network device is greater than or equal to a preset value, and any content buffered in the network device is extracted by the network device from an obtained data packet.

For example, when the duration of storing the first content in the network device is greater than or equal to 10 seconds, and/or the network device extracts, at the 5^{th} second, the fifth content paired with the first content, the network device deletes the first content. For example, 100 pieces of content are currently buffered in the network device. The 100 pieces of content are extracted from 100 data packets obtained by the network device. The 100 pieces of content are in one-to-one correspondence with the 100 data packets. The first content is content extracted earliest in the 100 pieces of content. If the preset value is 100, the network device deletes the first content.

### (4) Latency calculation:

It should be noted that for different network applications, manners for calculating the latency based on the first content may be different.

When there is the corresponding preset function relationship between the first content and the propagation latency of the target application, the latency determining module directly calculates the propagation latency of the target application based on the first content and the preset function relationship.

For example, if the first content is the length of the first data packet, and there is a corresponding preset function relationship between the length of the first data packet and the propagation latency of the target application, the latency determining module can calculate the propagation latency of the target application based on the length of the first data packet and the preset function relationship.

When there is no corresponding preset function relationship between the first content and the propagation latency of the target application, the latency determining module can perform the content pairing based on the first content to obtain the propagation latency of the target application. It should be noted that whether there is a corresponding preset function relationship between the first content and the propagation latency of the target application does not need to be determined in the latency determining module, the corresponding procedure is directly performed in the latency determining module.

When the latency determining module determines that the second content of the target application is stored in the network device, and the second content and the first content satisfy the pairing condition, the propagation latency of the target application can be determined based on the time difference between the first moment at which the network device processes the first data packet and the second moment at which the network device previously processes the second data packet of the target application. Optionally, the time difference between the first moment and the second moment is used as the propagation latency of the target application, or the time difference between the first moment and the second moment is adjusted to obtain the propagation latency of the target application.

The first moment may refer to any moment at which the first data packet is retained in the network device when the network device processes the first data packet. Optionally, the first moment refers to a moment at which the network device receives the first data packet. The second moment may refer to any moment at which the second data packet is retained in the network device when the network device processes the second data packet. Optionally, the second moment refers to a moment at which the network device sends the second data packet. For example, when the network device is the intermediate device shown in FIG. 1A, the first moment corresponds to T2', and the second moment corresponds to T1'.

For example, the second moment refers to a moment at which the network device sends the second data packet to the server device, and the first moment refers to a moment at which the network device receives the first data packet from the server device. The second moment is the 120.00^{th} second. The network device sends the second data packet to the server device, and the network device parses out a second value 100 from four bytes starting from the 5^{th} byte in the second data packet. The network device buffers three elements including a transmission direction of the second data packet, the second moment, and the second value (100) as the second content into the network device. The first moment is the 120.30^{th} second. The network device receives the first data packet from the server device, and parses out an integer value 100 from the four bytes starting from the 5^{th} byte in the first data packet. The network device uses three elements including the transmission direction of the first data packet, the first moment, and the first value (100) as the first content. The latency determining module traverses and compares the buffered content based on the first content, and determines that the second content and the first content satisfy the pairing condition. The transmission direction of the first data packet is opposite to the transmission direction of the second data packet, and a sequence of the first moment and the second moment is a preset sequence (the first moment is after the second moment). An operation result of performing a preset operation on the first value and the second value falls within a preset value range (in other words, a difference between the first value and the second value is 0). Therefore, the latency determining module can obtain a propagation latency of 0.30 seconds based on the difference between the first moment and the second moment.

In some embodiments, the propagation latency can further be determined based on more paired content. For example, the network device determines a first latency of the target application based on a time difference between a third moment at which a third data packet is processed and a fourth moment at which a fourth data packet of the target application is processed before the third moment, where the third data packet is a response data packet corresponding to the fourth data packet. In addition, a second latency of the target application is determined based on the time difference between the first moment and the second moment, and the propagation latency of the target application is determined based on the first latency and the second latency. Third content can be extracted based on the third data packet, and fourth content can be extracted based on the fourth data packet. Pairing the third content with the fourth content can indicate that the third data packet is a corresponding response data packet of the fourth data packet. For a principle of pairing the third content with the fourth content and a principle of determining the second latency of the target application, refer to a process of obtaining the first latency. Details are not described herein again. In other words, more latencies can be obtained based on a principle same to a principle of the first latency, and the network latency of the target application is determined based on a plurality of latencies. For example, the network latency of the target application is obtained based on an average value of the plurality of latencies.

### Latency optimization:

Optionally, after the latency determining module determines the propagation latency, when the propagation latency satisfies a preset latency optimization condition, the latency optimization module performs the latency optimization on the propagation latency of the target application. For example, the preset latency optimization condition is that the propagation latency is greater than a preset latency threshold. Specific implementations of the latency optimization may be as follows:
Optionally, the latency optimization module increases a priority of forwarding the data packet of the target application. For example, in a buffer queue in the network device, a priority of a data packet with a high propagation latency is increased, and a corresponding data packet is preferentially forwarded. Optionally, the latency optimization module updates a port for forwarding the data packet corresponding to the target application, where network quality of a transmission line corresponding to a port after the update is higher than network quality of a transmission line corresponding to the port before the update, so that data packets of the target application are transmitted via a transmission line with higher network quality. For a wireless network communication technology (Wi-Fi) scenario, when the network device is a wireless router, the network device adjusts a transmit direction of a Wi-Fi antenna to be consistent with the peer device, to improve transmit power of the Wi-Fi antenna. In addition, in a case in which the propagation latency is still large when the target application is adjusted, the data packets of the target application are limited, to ensure a propagation latency of data packets of another network application. Implementations of the latency optimization may be separately or jointly used.

For example, when the propagation latency of the target application exceeds 400 milliseconds, the latency optimization module increases the priority of forwarding the data packet of the target application. When a value of the propagation latency of the target application is reduced to 300 milliseconds, the latency optimization module selects to switch a port for forwarding the data packet from a Wi-Fi port to a 4G traffic port.

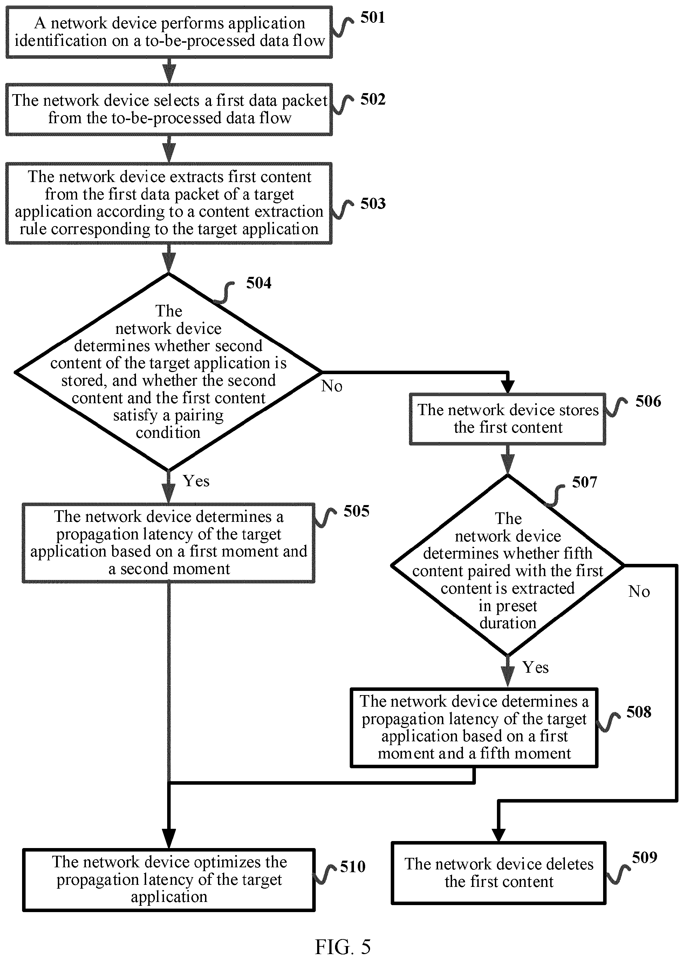

FIG. 5 shows a schematic flowchart of steps of a method for determining a propagation latency according to an embodiment of this application. For specific implementations of the steps shown in FIG. 5, refer to related descriptions in FIG. 4.

Step 501: A network device performs application identification on a to-be-processed data flow.

For a specific implementation of step 501, refer to related descriptions of the application identification corresponding to FIG. 4. Step 501 is an optional step. In some embodiments, the network device can obtain a data packet or a data flow on which the application identification has been performed.

Step 502: The network device selects a first data packet from the to-be-processed data flow.

For a specific implementation of step 502, refer to related descriptions of the data packet filtering corresponding to FIG. 4. Step 502 is an optional step. In some embodiments, the network device may not select the data packet from the to-be-processed data flow. For example, any data packet in the to-be-processed data flow may be used as the first data packet.

Step 503: The network device extracts first content from the first data packet of a target application according to a content extraction rule corresponding to the target application.

For a specific implementation of step 503, refer to related descriptions of the content extraction corresponding to FIG. 4.

Step 504: The network device determines whether second content of the target application is stored, and whether the second content and the first content satisfy a pairing condition.

The second content is extracted from a second data packet according to the content extraction rule of the target application, and that the second content and the first content satisfy a pairing condition indicates that the first data packet is a response data packet corresponding to the second data packet.

The network device performs step 505 if the network device determines that the second content of the target application is stored, and the second content and the first content satisfy the pairing condition; or the network device performs step 506 if the network device determines that the second content of the target application is not stored, or the second content and the first content do not satisfy the pairing condition.

For a specific pairing condition in step 504, refer to descriptions of the content pairing part corresponding to FIG. 4. Details are not described herein again.

Step 505: The network device determines a propagation latency of the target application based on a first moment and a second moment.

The first moment is a moment at which the network device processes the first data packet, and the second moment is a moment at which the network device processes the second data packet. Optionally, the first moment is a moment at which the network device receives the first data packet from a peer device, and the second moment is a moment at which the network device sends the second data packet to the peer device. Optionally, the peer device is a client device or a server device. For example, the client device is an application client of the target application, and the server device is an application server of the target application.

After step 505 is completed, step 510 is performed.

Step 506: The network device stores the first content.

Step 507: The network device determines whether fifth content paired with the first content is extracted in preset duration.

The fifth content is extracted from a fifth data packet, and the first content and the fifth content satisfying the pairing condition indicates that the first data packet is a response data packet corresponding to the second data packet.

The network device performs step 508 if the network device determines that the fifth content paired with the first content is extracted in the preset duration; or the network device performs step 509 if the network device determines that the fifth content paired with the first content is not extracted in the preset duration.

Step 508: The network device determines a propagation latency of the target application based on a first moment and a fifth moment.

The first moment is a moment at which the network device processes the first data packet, and the fifth moment is a moment at which the network device processes the fifth data packet.

After step 508 is completed, step 510 is performed.

Step 509: The network device deletes the first content.

Step 509 is an optional step. For example, in some embodiments, the procedure may end when the fifth content paired with the first content is not extracted in the preset duration after step 504 is performed. After step 509 is performed, the procedure ends.

Step 510: The network device optimizes the propagation latency of the target application.

For a specific implementation of the propagation latency optimization in step 510, refer to descriptions of the latency optimization part in FIG. 4. Step 510 is an optional step. In some embodiments, the procedure may end after step 505 and step 508 are completed.

It can be learned from the method for determining a propagation latency shown in FIG. 5 that the network device obtains the propagation latency regardless of whether binary data extracted from the first data packet can be decrypted into plaintext content. In this embodiment of this application, the network device extracts the first content that reflects a data packet feature of the target application. Therefore, the first content may be used to mark the first data packet as a data packet of the target application, and determine whether the first content and the previously buffered second content of the target application satisfy the pairing condition. The second content is also extracted according to the content extraction rule from the second data packet. If the second content is buffered in the network device, and the second content and the first content satisfy the pairing condition, it indicates that both the first data packet and the second data packet are data packets from the target application, and the first data packet is the response data packet corresponding to the second data packet. Based on this, the network device determines the propagation latency of the target application based on the time difference between the first moment at which the network device processes the first data packet and the second moment at which network device previously processes the second data packet. In this way, regardless of how data packets related to the target application are encrypted, any network device on a transmission path of the data packets may obtain the propagation latency of the target application by using the method for determining a propagation latency shown in FIG. 5. Therefore, a common method for determining a propagation latency is provided.

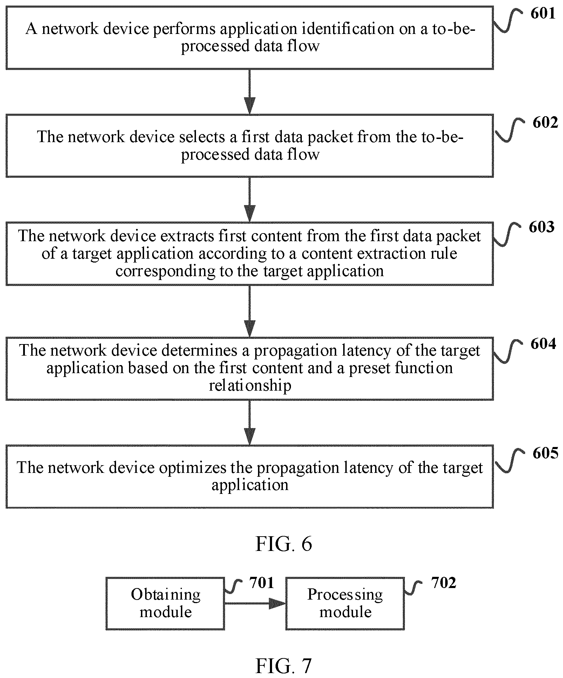

The method for determining a propagation latency shown in FIG. 5 is applicable to a case in which content extracted from data packets of a network application can be paired. However, in some network applications, there is a preset function relationship between content extracted from data packets and a propagation latency, and the propagation latency can be obtained without pairing of content extracted from two data packets. In view of this, an embodiment of this application provides another method for determining a propagation latency, and a procedure of the method may be shown in FIG. 6. For specific implementations of steps shown in FIG. 6, refer to related descriptions in FIG. 4.

Step 601: A network device performs application identification on a to-be-processed data flow.

For a specific implementation of step 601, refer to related descriptions of the application identification corresponding to FIG. 4. Step 601 is an optional step. In some embodiments, the network device can obtain a data packet or a data flow on which the application identification has been performed.

Step 602: The network device selects a first data packet from the to-be-processed data flow.

For a specific implementation of step 602, refer to related descriptions of the data packet filtering corresponding to FIG. 4. Step 602 is an optional step. In some embodiments, the network device may not select the data packet from the to-be-processed data flow. For example, any data packet in the to-be-processed data flow may be used as the first data packet.

Step 603: The network device extracts first content from the first data packet of a target application according to a content extraction rule corresponding to the target application.

Step 604: The network device determines a propagation latency of the target application based on the first content and a preset function relationship.

For a specific implementation of determining the propagation latency based on the first content and the preset function relationship in step 604, refer to related descriptions of the latency calculation part in FIG. 4. Details are not described herein again.

Step 605: The network device optimizes the propagation latency of the target application. Step 605 is an optional step. In some embodiments, the procedure may end after step 604 is completed.

It can be learned from the method for determining a propagation latency shown in FIG. 6 that the network device obtains the propagation latency regardless of whether binary data extracted from the first data packet can be decrypted into plaintext content. In this embodiment of this application, the network device can extract the first content that reflects a data packet feature of the target application. Therefore, the first content may be used to mark the first data packet as a data packet of the target application. Further, the network device can determine the propagation latency of the target application based on the first content and the corresponding function relationship between the first content and the propagation latency of the target application. Therefore, regardless of how data packets related to the target application are encrypted, any network device on a transmission path of the data packets may extract content and obtain the propagation latency of the target application in the foregoing manner. Therefore, a common method for determining a propagation latency is provided.

An embodiment of this application provides an apparatus for determining a network latency. FIG. 7 shows a schematic diagram of a structure of the apparatus. Optionally, the apparatus includes:
an obtaining module 701, configured to: extract first content from a first data packet of a target application according to a content extraction rule corresponding to the target application, where the first content includes binary data extracted from the first data packet and/or plaintext content obtained based on the binary data, and the first content reflects a data packet feature of the target application; and
a processing module 702, configured to: if a network device stores second content of the target application, and the second content and the first content satisfy a pairing condition, determine a propagation latency of the target application based on a time difference between a first moment at which the network device processes the first data packet and a second moment at which the network device previously processes a second data packet of the target application, where the second content is extracted from the second data packet according to the content extraction rule; and that the second content and the first content satisfy a pairing condition indicates that the first data packet is a response data packet corresponding to the second data packet.

Optionally, before extracting the first content from the first data packet of the target application, the obtaining module 701 is further configured to:
obtain a to-be-processed data flow of the target application; and select the first data packet from the to-be-processed data flow, where a length of the first data packet falls within a preset length range, and/or a preset position range of the first data packet includes a preset string.

Optionally, that the second content and the first content satisfy a pairing condition is determined based on at least one of the following:
an operation result of a preset operation between a first value in the first content and a second value in the second content falls within a preset value range; the first value and the second value satisfy a preset correspondence; a first transmission direction in the first content is opposite to a second transmission direction in the second content, and a sequence of the first moment and the second moment is a preset sequence; and the time difference between the first moment and the second moment falls within a preset time difference range.

Optionally, the processing module 702 is further configured to:
determine a first latency of the target application based on a time difference between a third moment at which a third data packet is processed and a fourth moment at which a fourth data packet of the target application is processed before the third moment, where the third data packet is a response data packet corresponding to the fourth data packet; and

The processing module 702 is specifically configured to:
determine a second latency of the target application based on the time difference between the first moment and the second moment; and determine the propagation latency of the target application based on the first latency and the second latency.

Optionally, the processing module 702 is further configured to:
if the second content of the target application is not buffered in the network device, or the second content and the first content do not satisfy the pairing condition, store the first content; and when the first content satisfies a preset condition, delete the first content, where the preset condition includes: duration of storing the first content is greater than or equal to preset duration, and/or fifth content paired with the first content is extracted by the network device from a fifth data packet within the preset duration, and/or the first content is content extracted earliest from all content that is currently buffered in the network device, a data amount of all the content buffered in the network device is greater than or equal to preset value, and any content buffered in the network device is extracted by the network device from an obtained data packet.

Optionally, the first data packet is a data packet sent by a peer device to the network device, the second data packet is a data packet sent by the network device to the peer device, and the peer device is an application client or an application server.

Optionally, when the peer device is the application client, the propagation latency is a user latency of the target application; or when the peer device is the application server, the propagation latency is a network latency of the target application.

Optionally, the processing module 702 is further configured to: if the propagation latency satisfies a preset latency optimization condition, increase a priority of forwarding a data packet of the target application, and/or update a port for forwarding the data packet corresponding to the target application, where network quality of a transmission line corresponding to a port after the update is higher than network quality of a transmission line corresponding to the port before the update.

An embodiment of this application further provides another apparatus for determining a network latency. The apparatus can also use the structure shown in FIG. 7. Optionally, the apparatus includes:
an obtaining module 701, configured to: extract first content from a first data packet of a target application according to a content extraction rule corresponding to the target application, where the first content includes binary data extracted from the first data packet and/or plaintext content obtained based on the binary data, and the first content reflects a data packet feature of the target application; and
a processing module 702, configured to determine a propagation latency of the target application based on the first content and a corresponding function relationship between the first content and the propagation latency of the target application.

Optionally, before extracting the first content from the first data packet of the target application, the obtaining module 701 is further configured to:
obtain a to-be-processed data flow of the target application; and select the first data packet from the to-be-processed data flow, where a length of the first data packet falls within a preset length range, and/or a preset position range of the first data packet includes a preset string.

Optionally, the first data packet is a data packet sent by a peer device to the network device, the second data packet is a data packet sent by the network device to the peer device, and the peer device is an application client or an application server.

Optionally, when the peer device is the application client, the propagation latency is a user latency of the target application; or when the peer device is the application server, the propagation latency is a network latency of the target application.

Optionally, the processing module 702 is further configured to: if the propagation latency satisfies a preset latency optimization condition, increase a priority of forwarding a data packet of the target application, and/or update a port for forwarding the data packet corresponding to the target application, where network quality of a transmission line corresponding to a port after the update is higher than network quality of a transmission line corresponding to the port before the update.

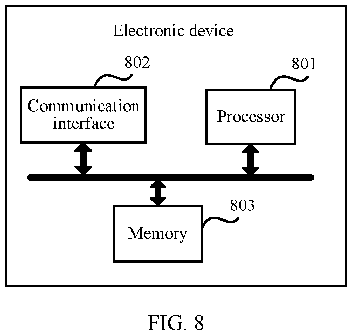

An embodiment of this application further provides an electronic device. The electronic device may have a structure shown in FIG. 8. The electronic device may be a computer device, or may be a chip or a chip system that can support a computer device in implementing the foregoing method.

The electronic device shown in FIG. 8 may include at least one processor 801. The at least one processor 801 is configured to be coupled to a memory, and read and execute instructions in the memory to implement steps of a method for determining a propagation latency according to an embodiment of this application. Optionally, the electronic device may further include a communication interface 802, configured to support the electronic device in receiving or sending signaling or data. The communication interface 802 in the electronic device may be configured to implement interaction with another electronic device. The processor 801 may be used by the electronic device to perform the steps in the method shown in FIG. 5 or FIG. 6. Optionally, the electronic device may further include a memory 803 storing computer instructions. The memory 803 may be coupled to the processor 801 and/or the communication interface 802, and is configured to support the processor 801 in invoking the computer instructions in the memory 803 to implement the steps of the method shown in FIG. 5 or FIG. 6. In addition, the memory 803 may further be configured to store related data in method embodiments of this application, for example, configured to store data and instructions that are needed to support the interaction of the communication interface 802, and/or configured to store configuration information needed by the electronic device to perform the method in embodiments of this application.

An embodiment of this application further provides a computer-readable storage medium. The computer-readable storage medium stores computer instructions. When the computer instructions are invoked and executed by a computer, the computer may be enabled to complete the method in any one of the foregoing method embodiments or possible designs of the foregoing method embodiments. In this embodiment of this application, the computer-readable storage medium is not limited. For example, the computer-readable storage medium may be a RAM (random-access memory, random access memory), a ROM (read-only memory, read-only memory), or the like.

An embodiment of this application further provides a chip, and the chip may include a processor. The processor is coupled to a memory, and is configured to read and execute a software program stored in the memory, and configured to complete a method in any one of the foregoing method embodiments or possible implementations of the method embodiments. "Coupling" means direct or indirect combination of two components, and the combination may be fixed or movable.

An embodiment of this application further provides a computer program product. When a computer reads and executes the computer program product, the computer is enabled to perform a method in any one of the foregoing method embodiments or possible implementations of the method embodiments.

All or some of the foregoing embodiments may be implemented by using software, hardware, firmware, or any combination thereof. When software is used to implement the foregoing embodiments, all or some of the foregoing embodiments may be implemented in a form of the computer instructions. When the computer instructions are loaded and executed on the computer, the procedure or functions according to embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber) or wireless (for example, infrared, microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

Steps of the methods or algorithms described in embodiments of this application may be directly embedded into hardware, a software unit executed by a processor, or a combination thereof. The software unit may be stored in a RAM memory, a flash memory, a ROM memory, an EPROM memory, an EEPROM memory, a register, a hard disk, a removable magnetic disk, a CD-ROM, or a storage medium of any other form in the art. For example, the storage medium may connect to a processor so that the processor may read information from the storage medium and write information to the storage medium. Optionally, the storage medium may alternatively be integrated into a processor. The processor and the storage media may be disposed in an ASIC, and the ASIC may be disposed in a terminal device. Optionally, the processor and the storage media may alternatively be disposed in different components in the terminal device.

These computer instructions may alternatively be loaded to a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in flowcharts and/or in one or more blocks in block diagrams.

## Claims

1. A method for determining a propagation latency, comprising:
extracting, by a network device, first content from a first data packet of a target application according to a content extraction rule corresponding to the target application, wherein the first content comprises binary data extracted from the first data packet and/or plaintext content obtained based on the binary data, and the first content reflects a data packet feature of the target application; and
if the network device stores second content of the target application, and the second content and the first content satisfy a pairing condition, determining a propagation latency of the target application based on a time difference between a first moment at which the network device processes the first data packet and a second moment at which the network device previously processes a second data packet of the target application, wherein the second content is extracted from the second data packet according to the content extraction rule, and that the second content and the first content satisfy a pairing condition indicates that the first data packet is a response data packet corresponding to the second data packet.

2. The method according to claim 1, wherein before the extracting, by a network device, first content from a first data packet of a target application according to a content extraction rule corresponding to the target application, the method further comprises:
obtaining, by the network device, a to-be-processed data flow of the target application; and
selecting, by the network device, the first data packet from the to-be-processed data flow, wherein a length of the first data packet falls within a preset length range, and/or a preset position range of the first data packet comprises a preset string.

3. The method according to claim 1 or 2, wherein that the second content and the first content satisfy a pairing condition is determined based on at least one of the following:
an operation result of a preset operation on a first value in the first content and a second value in the second content falls within a preset value range;
the first value and the second value satisfy a preset correspondence;
a first transmission direction in the first content is opposite to a second transmission direction in the second content, and a sequence of the first moment and the second moment is a preset sequence; or
the time difference between the first moment and the second moment falls within a preset time difference range.

4. The method according to any one of claims 1 to 3, wherein the method further comprises:
determining, by the network device, a first latency of the target application based on a time difference between a third moment at which a third data packet is processed and a fourth moment at which a fourth data packet of the target application is processed before the third moment, wherein the third data packet is a response data packet corresponding to the fourth data packet; and
the determining a propagation latency of the target application based on a time difference between a first moment at which the network device processes the first data packet and a second moment at which the network device previously processes a second data packet of the target application comprises:
determining a second latency of the target application based on the time difference between the first moment and the second moment; and
determining the propagation latency of the target application based on the first latency and the second latency.

5. The method according to any one of claims 1 to 4, wherein the method further comprises:
if the second content of the target application is not buffered in the network device, or the second content and the first content do not satisfy the pairing condition, storing, by the network device, the first content; and
when the first content satisfies a preset condition, deleting, by the network device, the first content, wherein the preset condition comprises: duration of storing the first content is greater than or equal to preset duration, and/or fifth content paired with the first content is extracted by the network device from a fifth data packet within the preset duration, and/or the first content is content extracted earliest from all content that is currently buffered in the network device, a data amount of all the content buffered in the network device is greater than or equal to a preset value, and any content buffered in the network device is extracted by the network device from an obtained data packet.

6. The method according to any one of claims 1 to 5, wherein the first data packet is a data packet sent by a peer device to the network device, the second data packet is a data packet sent by the network device to the peer device, and the peer device is an application client or an application server.

7. The method according to claim 6, wherein when the peer device is the application client, the propagation latency is a user latency of the target application; or when the peer device is the application server, the propagation latency is a network latency of the target application.

8. The method according to any one of claims 1 to 7, wherein the method further comprises:
if the propagation latency satisfies a preset latency optimization condition, increasing, by the network device, a priority of forwarding a data packet of the target application, and/or updating a port for forwarding the data packet corresponding to the target application, wherein network quality of a transmission line corresponding to a port after the update is higher than network quality of a transmission line corresponding to the port before the update.

9. A method for determining a propagation latency, comprising:
extracting, by a network device, first content from a first data packet of a target application according to a content extraction rule corresponding to the target application, wherein the first content comprises binary data extracted from the first data packet and/or plaintext content obtained based on the binary data, and the first content reflects a data packet feature of the target application; and
determining, by the network device, a propagation latency of the target application based on the first content and a corresponding function relationship between the first content and the propagation latency of the target application.

10. An apparatus for determining a propagation latency, comprising:
an obtaining module, configured to: extract first content from a first data packet of a target application according to a content extraction rule corresponding to the target application, wherein the first content comprises binary data extracted from the first data packet and/or plaintext content obtained based on the binary data, and the first content reflects a data packet feature of the target application; and
a processing module, configured to: if a network device stores second content of the target application, and the second content and the first content satisfy a pairing condition, determine a propagation latency of the target application based on a time difference between a first moment at which the network device processes the first data packet and a second moment at which the network device previously processes a second data packet of the target application, wherein the second content is extracted from the second data packet according to the content extraction rule, and that the second content and the first content satisfy a pairing condition indicates that the first data packet is a response data packet corresponding to the second data packet.

11. The apparatus according to claim 10, wherein before extracting the first content from the first data packet of the target application, the obtaining module is further configured to:
obtain a to-be-processed data flow of the target application; and
select the first data packet from the to-be-processed data flow, wherein a length of the first data packet falls within a preset length range, and/or a preset position range of the first data packet comprises a preset string.

12. The apparatus according to claim 10 or 11, wherein that the second content and the first content satisfy a pairing condition is determined based on at least one of the following:
an operation result of a preset operation on a first value in the first content and a second value in the second content falls within a preset value range;
the first value and the second value satisfy a preset correspondence;
a first transmission direction in the first content is opposite to a second transmission direction in the second content, and a sequence of the first moment and the second moment is a preset sequence; and
the time difference between the first moment and the second moment falls within a preset time difference range.

13. The apparatus according to any one of claims 10 to 12, wherein the processing module is further configured to:
determine a first latency of the target application based on a time difference between a third moment at which a third data packet is processed and a fourth moment at which a fourth data packet of the target application is processed before the third moment, wherein the third data packet is a response data packet corresponding to the fourth data packet; and
the processing module is specifically configured to:
determine a second latency of the target application based on the time difference between the first moment and the second moment; and
determine the propagation latency of the target application based on the first latency and the second latency.

14. The apparatus according to any one of claims 10 to 13, wherein the processing module is further configured to:
if the second content of the target application is not buffered in the network device, or the second content and the first content do not satisfy the pairing condition, store the first content; and
when the first content satisfies a preset condition, delete the first content, wherein the preset condition comprises: duration of storing the first content is greater than or equal to preset duration, and/or fifth content paired with the first content is extracted by the network device from a fifth data packet within the preset duration, and/or the first content is content extracted earliest from all content that is currently buffered in the network device, a data amount of all the content buffered in the network device is greater than or equal to a preset value, and any content buffered in the network device is extracted by the network device from an obtained data packet.

15. The apparatus according to any one of claims 10 to 14, wherein the first data packet is a data packet sent by a peer device to the network device, the second data packet is a data packet sent by the network device to the peer device, and the peer device is an application client or an application server.

16. The apparatus according to claim 15, wherein when the peer device is the application client, the propagation latency is a user latency of the target application; or when the peer device is the application server, the propagation latency is a network latency of the target application.

17. The apparatus according to any one of claims 10 to 16, wherein the processing module is further configured to:
if the propagation latency satisfies a preset latency optimization condition, increase a priority of forwarding a data packet of the target application, and/or update a port for forwarding the data packet corresponding to the target application, wherein network quality of a transmission line corresponding to a port after the update is higher than network quality of a transmission line corresponding to the port before the update.

18. An apparatus for determining a propagation latency, comprising:
an obtaining module, configured to: extract first content from a first data packet of a target application according to a content extraction rule corresponding to the target application, wherein the first content comprises binary data extracted from the first data packet and/or plaintext content obtained based on the binary data, and the first content reflects a data packet feature of the target application; and
a processing module, configured to determine a propagation latency of the target application based on the first content and a corresponding function relationship between the first content and the propagation latency of the target application.

19. An electronic device, wherein the electronic device comprises one or more processors and one or more memories, the one or more memories store one or more computer instructions, and when the one or more computer instructions are executed by the one or more processors, the electronic device is enabled to perform the method according to any one of the claims 1 to 8 or 9.

20. A computer-readable storage medium, wherein the computer-readable storage medium comprises computer instructions, and when the computer instructions are run on a computer, the computer is enabled to perform the method according to any one of claims 1 to 8 or 9 is implemented.
